# FASCICULE DE BREVET EUROPEEN

(11) **EP 3 350 811 B1**
(45) Date de publication et mention de la délivrance du brevet: **31.07.2019**
(21) Numéro de dépôt: 16769930.5
(22) Date de dépôt: 15.09.2016
(51) Int. Cl.: G21C 17/112, G01K 1/02, G01K 1/14

(54) **CEINTURE DE MESURE DE TEMPERATURE D'UN OBJET**
GURT ZUR MESSUNG DER TEMPERATUR EINES OBJEKTS
BELT FOR MEASURING THE TEMPERATURE OF AN OBJECT

(30) Priorité: 18.09.2015 FR 1558826
(43) Date de publication de la demande: 25.07.2018
(73) Titulaire: Electricité de France, 75008 Paris (FR)
(72) Inventeur: PETIT, Marc, 95300 Pontoise (FR); BLAIRON, Sylvain, 78360 Montesson (FR)
(74) Mandataire: Regimbeau
(86) Numéro de dépôt international: PCT/EP2016/071789
(87) Numéro de publication internationale: WO 2017/046223

(56) Documents cités:
- DE-A1-102009 003 848
- US-A- 4 553 432
- US-A1- 2014 334 517

## Description

L'invention concerne une ceinture de mesure de température d'un objet.

Un domaine d'application de l'invention concerne notamment les conduites d'eau, telles que par exemple celles du circuit primaire de centrales nucléaires.

On connaît par le document US-A-4,553,432 une ceinture de mesure de température, utilisée pour mesurer la température et l'humidité autour de conduites de vapeurs, afin d'y détecter des fuites ou dans un égout d'une centrale nucléaire pour détecter que l'eau tombant dans cet égout provient d'une fuite, afin d'être utilisée comme système de surveillance de ceux-ci.

Cette ceinture de mesure connue présente notamment l'inconvénient que le câble de mesure de température est recouvert d'une bande thermo-isolante qui l'empêche d'être directement en contact avec l'objet à mesurer. Ainsi, la mesure fournie par cette ceinture connue, certes peut convenir dans un système de surveillance de fuites, mais a une mauvaise précision quant à la valeur de température.

Le document US 2014/0334517A1 concerne une ceinture comportant des capteurs de température situés contre une couche thermo-isolante.

Le document DE 10 2009 003848 A1 concerne un dispositif de contrôle de la température, comportant des capteurs de température fixés le long d'une bande porteuse composée d'une plaque de circuit flexible.

L'invention vise à améliorer la ceinture de mesure de température pour avoir une meilleure précision de mesure.

En particulier, l'invention doit pouvoir être utilisée dans certains environnements contraignants, tels que par exemple ceux présentant un espace réduit, une haute température, des rayonnements ionisants, comme par exemple sur des conduites d'eau de réacteurs à eau pressurisée (en abrégé : REP) de centrales de production d'électricité.

Ces environnements sont soumis à des exigences supplémentaires de qualification de la ceinture de mesure, pouvant être par exemple la résistance aux séismes, la résistance à la pression, la résistance aux hautes températures, la résistance à l'humidité, la résistance aux fortes contraintes mécaniques.

En outre, dans le cas d'un environnement soumis à des rayonnements ionisants, comme par exemple pour une conduite d'eau de réacteur nucléaire à eau pressurisée, les personnes devant installer la ceinture de mesure sur la conduite sont exposés à ces rayonnements. Il s'ensuit que non seulement le personnel doit intervenir très rapidement pour minimiser la quantité de rayonnement reçue lors de son intervention, mais doit en outre disposer d'une ceinture de mesure fiable, systématique et pouvant s'adapter à tout type d'objet sur lequel il doit être installé.

Ainsi, la ceinture de mesure de température doit par exemple pouvoir être installée sur un objet pouvant avoir une température moyenne de 300°C dans le cas d'une conduite d'une centrale de production d'électricité en fonctionnement et de 70°C à l'arrêt.

Dans le cas d'une conduite d'eau d'un réacteur nucléaire d'une centrale de production d'électricité, soumise à des rayonnements ionisants, l'irradiation dans la zone de montage de la ceinture peut atteindre 5 kGy/an (ou 100000 Gy en 20 ans) à pleine puissance.

Ainsi, ces environnements ne doivent pas être des facteurs pénalisants sur le temps de montage et sur le bon positionnement de la ceinture de fixation sur l'objet.

Dans le cas d'une conduite d'eau d'un réacteur nucléaire d'une centrale de production d'électricité, il est connu des thermocouples placés directement en contact avec la zone à étudier pour mesurer la température.

Il est connu que les thermocouples soient directement soudés sur la tuyauterie, créant des zones de contraintes en surface. A l'issue de l'instrumentation, il y avait lieu de meuler la surface sur l'épaisseur impactée par la zone de contrainte afin d'éviter tout risque ultérieur de fissuration. Cette solution peut répondre partiellement au problème de la tenue thermique mais se révèle très pénalisante en termes de dosimétrie car les temps nécessaires pour l'installation et le bon positionnement du capteur et le reconditionnement de la tuyauterie à l'issu de la campagne de mesure sont élevés. Mais nombre de tuyauteries ne sont pas accessibles à ce genre de mise en oeuvre. Dans le cas de la mesure de fatigue thermique un nombre élevé de capteurs (8 à 20 pour des sections de 2 à 16 pouces, i.e. 5.08 à 40.64)cm doit être placé, selon une répartition prédéfinie en fonction des phénomènes attendus sur une même circonférence de la tuyauterie. Le tracé et plus encore le soudage en place de chaque capteur individuellement sur la tuyauterie est difficile et parfois même impossible en raison de la présence de supportages et d'obstacles ne permettant pas à un soudeur d'opérer, dans un temps raisonnable. Ce problème se retrouve lors de la dépose de l'instrumentation, au cours de laquelle il y a lieu de gérer les effluents liés au meulage de la tuyauterie. Ce type d'instrumentation s'accompagne d'un dossier technique très complexe et d'autorisations administratives difficiles à obtenir.

En outre, la mise en oeuvre de systèmes de positionnement et de fixation sur la tuyauterie de capteurs réunis dans un même dispositif présente de manière générale des problèmes de conduction thermique entre capteurs et tuyauterie et de modes communs entre capteurs.

Ainsi, l'invention vise à obtenir une ceinture de mesure de température d'un objet, palliant les inconvénients de l'état de la technique et qui réponde aux exigences de ces environnements contraignants et reste fiable dans ceux-ci, en nécessitant un temps d'intervention très court du personnel pour le montage de la ceinture sur l'objet dans ces environnements.

A cet effet, l'invention prévoit une ceinture de mesure de température d'un objet selon la revendication 1.

Grâce à l'invention, on applique directement le capteur de température contre l'objet tout en ayant une bonne précision de la mesure de la température par ce capteur, en s'affranchissant des perturbations extérieures à l'objet sur lequel la ceinture est installée. Grâce à l'invention, on peut immobiliser avec rapidité et fiabilité le capteur de température contre l'objet dans les environnements contraignants pour le personnel. Ainsi, le montage direct du capteur de température contre l'objet peut être systématisé avec une grande rapidité dans des environnements contraignants tels que ceux mentionnés ci-dessus et exigeant une grande rapidité d'intervention du personnel, tout en obtenant une bonne précision de la mesure.

Suivant un mode de réalisation de l'invention, il est prévu comme capteur de température une pluralité de capteurs de température répartis le long de la circonférence du feuillard, la pluralité de capteurs de température étant associée à une pluralité de supports individuels thermo-isolants de ces capteurs de température, les supports étant guidés chacun suivant une direction de guidage vers l'objet entre des patins thermo-isolants fixés au feuillard.

Suivant un mode de réalisation de l'invention, pour un objet ayant une surface extérieure courbe et convexe, devant être entouré par la circonférence du feuillard, la direction de guidage est radiale.

Suivant un mode de réalisation de l'invention, le support est contraint à se déplacer le long de la direction de guidage vers l'objet par un dispositif de contrainte monté entre le support et le feuillard.

Suivant un mode de réalisation de l'invention, le capteur de température comporte une partie d'application contre l'objet, disposée sur une surface intérieure du support, destinée à être tournée vers l'objet.

Suivant un mode de réalisation de l'invention, les patins sont fixés à une surface intérieure du feuillard.

Suivant un mode de réalisation de l'invention, la ceinture comporte un dispositif de soulèvement du support apte à occuper la première position haute, et apte à passer à la deuxième position basse, le support étant contraint à se déplacer le long de la direction de guidage vers l'objet de la première position à la deuxième position par un dispositif de contrainte monté entre le support et le feuillard, le dispositif de soulèvement étant actionnable de l'extérieur pour faire passer le capteur de la première position à la deuxième position.

Suivant un mode de réalisation de l'invention, le dispositif de soulèvement du support comporte une platine supérieure, fixée sur le support par au moins une tige traversant le feuillard, la platine étant à l'extérieur du feuillard.

Suivant un mode de réalisation de l'invention, le dispositif de soulèvement du support comporte un organe de maintien pour maintenir le support dans la première position haute, fixé d'une manière amovible à la platine supérieure pour permettre, lorsque l'organe de maintien est ôté de la platine, de faire passer le capteur de la première position haute à la deuxième position basse.

Suivant un mode de réalisation de l'invention, le dispositif de contrainte comporte au moins un ressort monté entre le support et le feuillard pour contraindre le support à se déplacer le long de la direction de guidage vers l'objet.

Suivant un mode de réalisation de l'invention, les organes de maintien, associés respectivement aux supports individuels, peuvent être solidaires entre eux.

Suivant un mode de réalisation de l'invention, l'organe de maintien comprend un fil, qui passe dans un guide fixé à la platine pour maintenir le support dans la première position haute et qui comporte au moins une section de préhension située à l'extérieur de la platine pour permettre d'ôter du guide le fil pour faire passer le capteur de la première position haute à la deuxième position basse.

Suivant un mode de réalisation de l'invention, le guide comporte au moins deux poulies, qui sont montées rotatives par rapport à la platine et entre lesquelles est guidé le fil.

Suivant un mode de réalisation de l'invention, le capteur de température comporte un thermocouple.

L'invention sera mieux comprise à la lecture de la description qui va suivre, donnée uniquement à titre d'exemple non limitatif en référence aux dessins annexés, sur lesquels :
- la figure 1 est un schéma d'une chaîne d'instrumentation dans laquelle peut être utilisée la ceinture de mesure suivant l'invention,
- la figure 2 est une vue schématique dans un plan transversal de la ceinture de mesure, lorsqu'elle est installée autour d'un objet, suivant un mode de réalisation de l'invention,

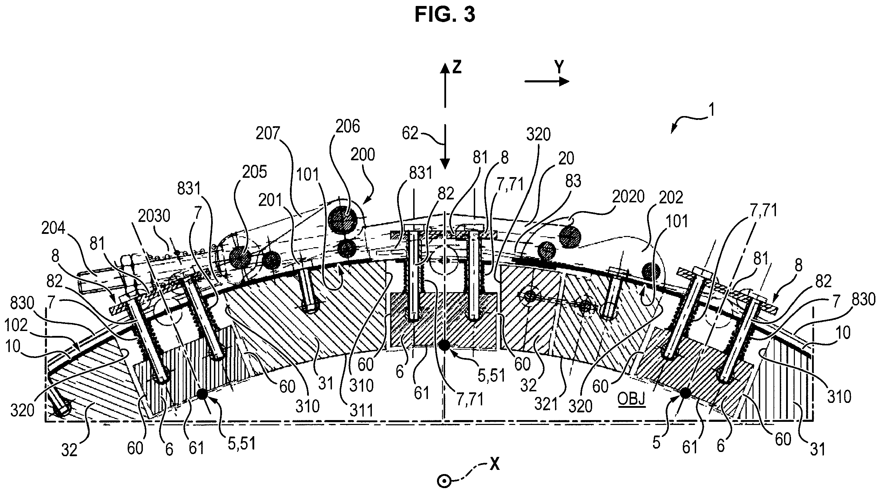

- la figure 3 est une vue schématique dans un plan transversal d'une partie de la ceinture de mesure de la figure 2, suivant un mode de réalisation de l'invention,

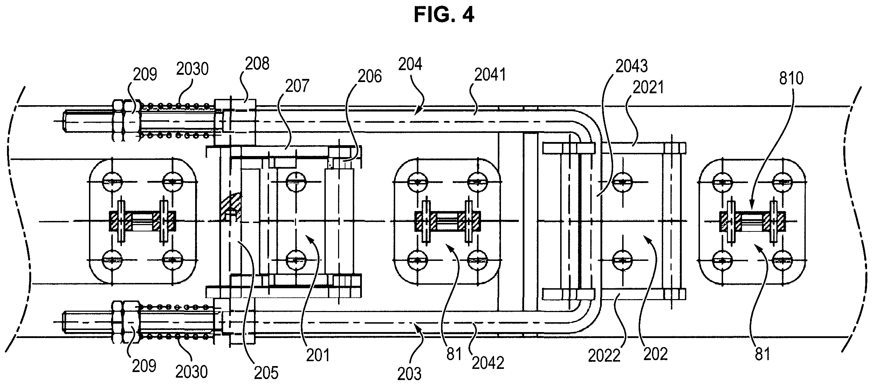

- la figure 4 est une vue de dessus d'une partie de la ceinture de mesure suivant les figures 2 et 3,

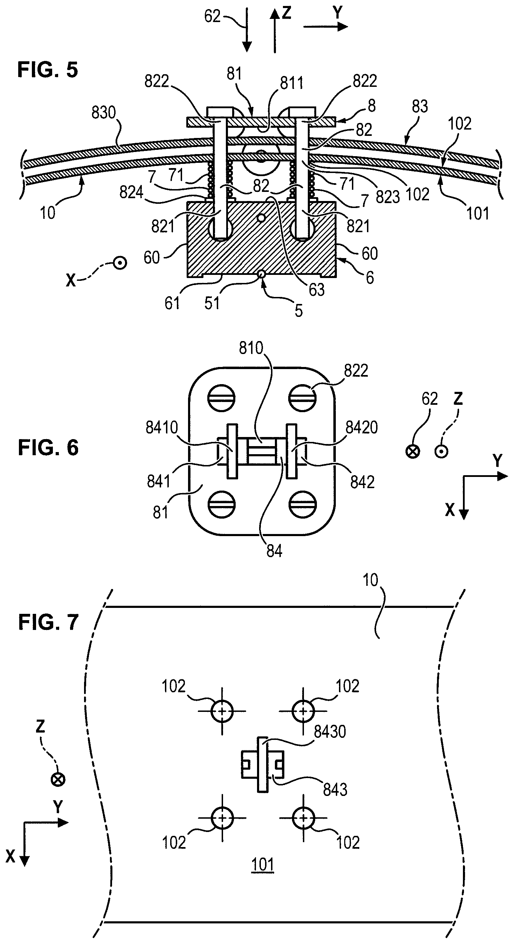

- la figure 5 est une vue schématique dans un plan transversal d'un support du capteur de température de la ceinture, suivant un mode de réalisation de l'invention,
- la figure 6 est une vue de dessus d'une platine du support de la figure 5, suivant un mode de réalisation de l'invention,
- la figure 7 est une vue de dessous d'une partie d'un feuillard de la ceinture de mesure suivant un mode de réalisation de l'invention,

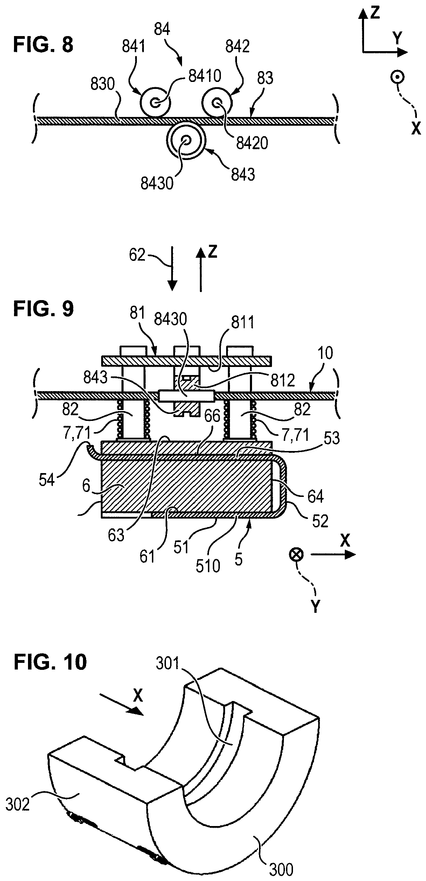

- la figure 8 est une vue dans un plan transversal d'une partie du support des figures 5 et 6, suivant un mode de réalisation de l'invention,
- la figure 9 est une vue schématique de côté du support de la figure 5, suivant un mode de réalisation de l'invention,
- la figure 10 est une vue schématique d'un module calorifuge pouvant être prévu pour la ceinture de mesure suivant un mode de réalisation de l'invention.

Aux figures, la ceinture 1 de mesure suivant l'invention sert à fixer au moins un capteur 5 contre un objet OBJ. Cet objet OBJ peut être par exemple une conduite OBJ de fluide, tel que par exemple une conduite d'eau, ainsi que cela est décrit ci-dessous. Un cas d'application de l'invention est une ceinture 1 de fixation mécanique d'un ou plusieurs capteur(s) 5 sur une conduite de liquide ou de gaz comme objet OBJ. L'objet OBJ est par exemple une conduite d'eau du circuit primaire d'un réacteur nucléaire à eau pressurisée (REP) d'une centrale de production d'électricité. La conduite d'eau peut être une tuyauterie haute pression. La ceinture comporte un ou plusieurs capteurs 5 de température. Bien entendu, la ceinture 1 peut comporter en plus un ou plusieurs capteurs autres que des capteurs 5 de température, ou ne comporter qu'un ou plusieurs capteurs 5 de température.

La ceinture 1 comporte un feuillard 10 ayant une circonférence destinée à entourer l'objet OBJ, tel que par exemple la conduite.

Aux figures, l'objet OBJ s'étend suivant une direction axiale X, autour de laquelle la ceinture 1 doit être disposée. Par conséquent, le feuillard 10 de la ceinture 1 entoure l'objet OBJ dans un plan transversal à la direction X, ce plan transversal étant formé par les directions Z et Y, perpendiculaires entre elles et perpendiculaires à la direction X. La direction Z part de l'axe X de l'objet OBJ pour traverser l'objet OBJ vers la ceinture devant entourer l'objet OBJ autour de cet axe X. La direction Y est la direction tangente à la circonférence du feuillard 10 autour de l'objet OBJ et autour de l'axe X. Le feuillard 10 est une bande, par exemple métallique.

L'objet OBJ ou la conduite OBJ a par exemple un contour extérieur cylindrique, par exemple circulaire. Par exemple, dans le cas d'un objet OBJ cylindrique circulaire autour de l'axe X, la direction Z est la direction radiale centripète, partant de l'objet OBJ, de l'intérieur vers l'extérieur par rapport à la ceinture 1. L'objet OBJ ou la conduite OBJ peut avoir une surface extérieure métallique, par exemple en acier, contre laquelle la ceinture 1 est disposée. Bien entendu, l'invention peut s'appliquer à tout type d'objet, notamment cylindrique autour de la direction X devant être entourée par la ceinture 1, pouvant être autre que ceux mentionnés ci-dessus comme par exemple les systèmes thermodynamiques, l'agro-alimentaire, la pétrochimie, les unités de méthanisation.

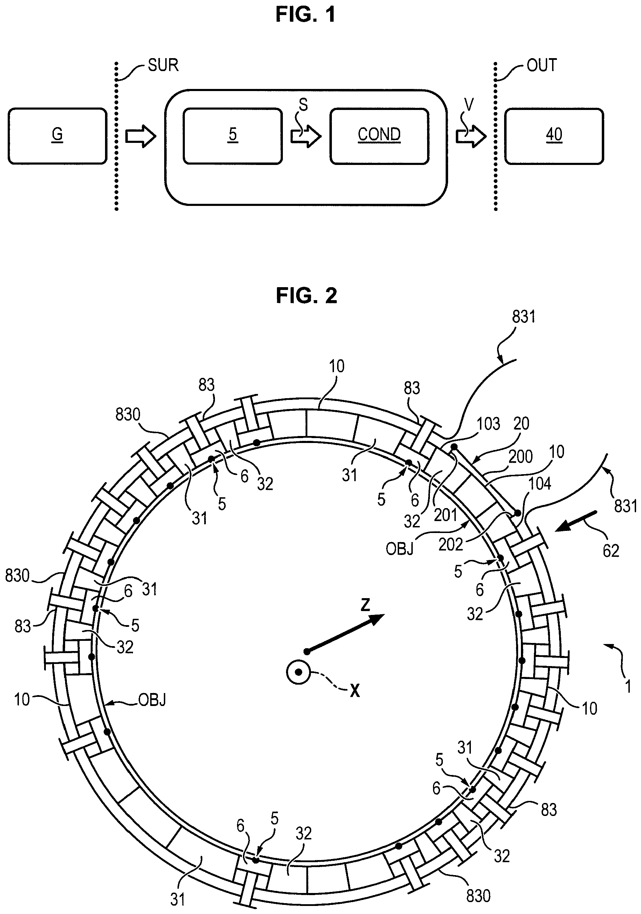

La ceinture 1 comporte au moins un capteur 5 de température. Par exemple, à la figure 1, une pluralité de capteurs 5 de température sont prévus sur la ceinture 1. Le capteur 5 de température ou chacun des capteurs 5 de température comprend par exemple un thermocouple.

La ceinture 1 de mesure comporte en outre un dispositif 20 de serrage du feuillard 10 autour de l'objet OBJ. Le dispositif 20 de serrage permet par exemple un accrochage du feuillard 10 autour de l'objet OBJ.

Suivant un mode de réalisation, le capteur 5 de température fait partie d'une chaîne de mesure. La figure 1 représente ces éléments ainsi que les interfaces entre la chaine de mesure et les éléments externes. Une première interface est par exemple formée par la surface externe SUR de l'objet OBJ, contre laquelle le capteur 5 doit être fixé par la ceinture 1. Le capteur 5 de température sert à transformer la grandeur physique G ou mesurande G en signal exploitable S (souvent électrique). Le conditionneur COND convertit la grandeur S en sortie du capteur 5 en une tension dont l'amplitude ou la fréquence reflète l'évolution temporelle de la grandeur physique G. La première interface SUR constitue la frontière entre le processus physique et l'information recherchée. La capacité du capteur 5 à mesurer la température peut être pénalisée par des éléments propres à l'environnement (corrosion, irrégularités géométrique, humidité, etc.) et particulièrement pour les capteurs en contact direct.

Dans certaines applications (ex. mesures accrochables sur une tuyauterie) il existe un autre élément indispensable pour le bon fonctionnement de la chaine d'instrumentation. Il s'agit du système 1 de fixation mécanique du capteur 5 qui a comme principal rôle de supporter et maintenir le capteur 5 en contact avec le composant dont on veut faire la mesure, le plus souvent une tuyauterie, permettant que la chaine continue d'assurer la fonction attendue : mesurer la grandeur physique. Pour garantir le bon fonctionnement du capteur 5, le système 1 de fixation doit aussi l'isoler de toute perturbation inhérente au processus mais non désirable pour la mesure (ex. vibration, contraintes thermiques et mécaniques, etc.).

Dans le cas d'un réacteur à eau pressurisée (REP) un strict respect des objectifs de qualité à atteindre est indispensable. Tel est le cas notamment du matériel mécanique résistant à la pression (circuits primaire, secondaire et auxiliaires) pour laquelle les Règles de Conception et de Construction (RCC-M pour les matériels mécanique) ont été définies. Pour tout matériel mécanique non soumis aux RCC, comme par exemple pour le système 1 de fixation du capteur 5 de température, un processus de qualification doit être mis en place pour garantir les performances métrologiques des chaines d'instrumentation (qualification fonctionnelle). Concernant le système 1 de fixation mécanique proprement dit, il n'existe pas de normes de conception et fabrication dédiées, mais les essais de qualification doivent vérifier leur innocuité vis-à-vis du composant sur lequel il sera installé.

Lors de la qualification, des conditions telles que la résistance aux séismes, la pression, la température ou l'humidité peuvent être vérifiées.

En plus des conditions requises lors de la qualification, d'autres conditions particulières du circuit primaire d'un REP doivent être considérées quand de tels systèmes 1 de fixation y sont installés à demeure :
- Une température moyenne de 300°C en fonctionnement, et inférieure à 70°C en arrêt de tranche.
- Une irradiation de 5 kGy/an (ou 100000 Gy en 20 ans) à pleine puissance.

La première condition ci-dessus a un impact sur le choix du matériau et sur la conception du système 1 de fixation. Le système 1 de fixation du capteur 5 doit être conçu pour résister aux fortes contraintes mécaniques tout en conservant sa fonction principale. Quant à la deuxième condition, elle joue un rôle implicite sur le choix du matériau mais le principal impact de l'irradiation sur la conception du système 1 de fixation du capteur 5 est le temps d'intervention nécessaire pour l'installation du système 1 de fixation ou pour toute opération de maintenance du capteur 5 ou du système 1 de fixation lui-même.

Un cas d'application de l'invention est une ceinture 1 de fixation mécanique d'un capteur 5 de température contre une conduite OBJ d'eau du circuit primaire d'un réacteur nucléaire à eau pressurisée d'une centrale de production d'électricité.

Suivant l'invention, le capteur 5 de température est monté sur un support 6 individuel thermo-isolant. Le support 6 individuel thermo-isolant est guidé suivant une direction 62 de guidage vers l'objet OBJ entre au moins deux patins 31, 32 thermo-isolants, fixés au feuillard 10. Les patins 31, 32 thermo-isolants servent à l'appui contre l'objet OBJ et comportent une surface intérieure 311, 321 de contact avec l'objet OBJ. Cette surface intérieure 311, 321 peut avoir une forme complémentaire de celle de l'objet OBJ, par exemple cylindrique circulaire avec le même diamètre que celui de l'objet OBJ cylindrique circulaire.

Suivant un mode de réalisation, le support 6 individuel thermo-isolant a une conductivité thermique inférieure à celle du feuillard 10 et/ou à celle de l'objet OBJ ou à celle de l'acier. Suivant un mode de réalisation, le support 6 individuel thermo-isolant est en un matériau ayant une conductivité thermique supérieure ou égale à 0.15W/mK et inférieure ou égale à 0.40W/mK, par exemple à 500 °C. Ainsi, suivant un mode de réalisation, le support 6 individuel thermo-isolant peut être en silicate de calcium comprimé, par exemple en le matériau Monolux 500 (marque déposée), ayant une conductivité thermique de 0.20W/mK à 500°C. Dans un autre mode de réalisation, le support 6 individuel thermo-isolant peut être en un matériau de résine polymère ou autres. Suivant un mode de réalisation, le matériau du support 6 individuel thermo-isolant ne contient pas d'halogènes, pour pouvoir être approprié à l'utilisation dans un environnement nucléaire (REP ou autres), ainsi que mentionné ci-dessus. Suivant un mode de réalisation, le patin thermo-isolant 31, 32 a une conductivité thermique inférieure à celle du feuillard 10 et/ou à celle de l'objet OBJ ou à celle de l'acier. Suivant un mode de réalisation, le patin thermo-isolant 31, 32 est en un matériau ayant une conductivité thermique supérieure ou égale à 0.15W/mK et inférieure ou égale à 0.40W/mK, par exemple à 500 °C. Ainsi, suivant un mode de réalisation, le patin thermo-isolant 31, 32 peut être en silicate de calcium comprimé, par exemple en le matériau Monolux 500, ayant une conductivité thermique de 0.20W/mK à 500°C. Dans un autre mode de réalisation, le patin thermo-isolant 31, 32 peut être en un matériau de résine polymère ou autres. Suivant un mode de réalisation, le matériau du patin thermo-isolant 31, 32 ne contient pas d'halogènes, pour pouvoir être approprié à l'utilisation dans un environnement nucléaire (REP ou autres), ainsi que mentionné ci-dessus.

Dans le cas de plusieurs capteurs 5 de température répartis le long de la circonférence du feuillard 10, chacun des capteurs 5 de température est monté sur son support individuel respectif thermo-isolant 6. Les supports 6 thermo-isolants sont guidés chacun suivant leur propre direction 62 de guidage vers l'objet OBJ entre des patins 31, 32 thermo-isolants fixés au feuillard 10.

Par exemple, pour un objet OBJ ayant une surface extérieure courbe et convexe, devant être entourée par la circonférence du feuillard 10, la direction 62 de guidage est radiale. Par exemple, dans le cas d'un objet OBJ cylindrique circulaire entouré par la ceinture 1, la direction 62 de guidage est dirigée dans le sens centripète, en sens inverse de la direction Z.

Suivant un mode de réalisation, un dispositif 7 de contrainte est monté entre le support 6 et le feuillard 10 pour contraindre le support 6 à se déplacer le long de la direction 62 de guidage vers l'objet OBJ.

Les supports 6 et les capteurs 5 de température sont ainsi guidés d'une manière concentrique vers l'objet OBJ.

Par exemple, chaque patin 31, 32 comporte une surface latérale 310 ou 320 60, située en face d'une surface latérale 60 du support 6. La surface 310 et/ou 320 et/ou la surface 60 est par exemple sensiblement radiale. Le support 6 se trouvant entre les surfaces de guidage 310 et 320.

En outre, suivant un mode de réalisation, le capteur 5 de température comporte une partie 51 d'application contre l'objet OBJ. Cette partie 51 est disposée sur une surface intérieure 61 du support 6, destiné à être tournée vers l'objet OBJ.

Suivant un mode de réalisation, les patins 6 sont fixés à une surface intérieure 101 du feuillard 10.

Suivant un mode de réalisation, un dispositif 8 de soulèvement du support 6 en sens inverse de la direction 62 de guidage vers l'objet est prévu, pour soulever le support 6 afin que, dans une première position haute, le capteur 5 ne touche pas l'objet OBJ et que les patins 31 et 32 touchent l'objet OBJ.

Ainsi, suivant un mode de réalisation, le dispositif 8 de soulèvement du support 6 est apte à occuper une première position haute, dans laquelle le capteur 5 est à une distance non nulle de l'objet OBJ le long de la direction 62 de guidage. Le dispositif 8 de soulèvement est apte à passer à une deuxième position basse, dans laquelle le capteur 5 est appliqué contre l'objet OBJ. Le dispositif 8 de soulèvement est actionnable de l'extérieur pour faire passer le capteur 5 de la première position à la deuxième position, le dispositif 7 de contrainte permettant de contraindre le support 6 et donc le capteur 5 à s'abaisser le long de la direction 62 de guidage vers l'objet OBJ de la première position à la deuxième position.

L'invention permet ainsi de garantir des niveaux de précision élevés et des constantes de temps très faibles, grâce au support isolant 6 par l'intermédiaire duquel le système mécanique 7 plaque un capteur 5 de température ou thermocouple 5 en contact direct avec l'objet OBJ, tel que par exemple une tuyauterie, pour mesurer une température à la surface de cet objet OBJ. Sur l'objet OBJ sont ainsi placés, aux endroits prédéfinis en fonction des phénomènes à mesurer, le ou les capteurs 5 de température et un dispositif 7 de mise en pression individuel isolé thermiquement, garantissant un contact satisfaisant pour chaque capteur 5 de température avec l'objet OBJ. La structure générique de la ceinture est spécifiquement adaptée à chaque diamètre et section disponible de l'objet OBJ ou conduite OBJ, la plage d'applicabilité de la ceinture 1 pouvant aller de 10.16 cm (4 pouces) à plusieurs centaines de centimètres (pouces). Dans le cas de grands diamètres de l'objet OBJ, le recours à plusieurs sections de ceinture 1 reliées entre elles permet de garantir un bon maintien de la ceinture 1 en tout point de la circonférence, les patins 31, 32 de positionnement de la ceinture 1 permettant de respecter l'espacement prévu entre chaque section. La ceinture 1 a ainsi été conçue pour une installation rapide (moins de 2 minutes par ceinture) et peut être utilisée jusqu'à 500, 800, voir 1000°C, suivant le matériau thermo-isolant utilisé dans le support 6 et les patins 31, 32 et suivant la nature des thermocouples 5. La ceinture 1 peut porter un ou plusieurs capteurs 5 de température, la densité de capteurs 5 pouvant aller jusqu'à un capteur 5 de température tous les 40 mm environ le long de la circonférence du feuillard 10.

La ceinture 1 tient compte des contraintes liées à l'environnement nucléaire (rayonnement ionisant) ainsi que de toutes les autres contraintes propres à une installation industrielle, telles que l'encombrement, la compatibilité des matériaux, la tenue mécanique du système au séisme.

Suivant un mode de réalisation, le dispositif 8 de soulèvement du support 6 thermo-isolant comporte une platine supérieure 81, fixée sur le support 6 par au moins une tige 82 traversant un trou 102 du feuillard 10. La platine 81 est à l'extérieur du feuillard 10, c'est-à-dire au-dessus du feuillard 10 dans le sens de la direction Z.

Suivant un mode de réalisation, le dispositif 7 de contrainte comporte un ou plusieurs ressorts 71 montés entre le support 6 et le feuillard 10. Le ou les ressort 71 est par exemple un ressort de compression. Le ou les ressorts contraignent le support 6 à s'abaisser le long de la direction 62 de guidage vers l'objet OBJ. Par exemple, le ressort 71 est un ressort hélicoïdal entourant la tige 82. Une rondelle 824 peut être prévue entre le ressort 71 et la surface supérieure 63. La tige 82 peut être formée par exemple par une vis. La tige 82 comporte une première partie d'extrémité inférieure 821 fixée à une surface supérieure 63 du support 6, par exemple en étant vissée dans cette surface supérieure 63, une deuxième partie d'extrémité supérieure 822 fixée à la platine 81 et un tronçon intermédiaire 823 s'étendant entre la partie 821 d'extrémité inférieure et la partie 822 d'extrémité supérieure et traversant le trou 102 du feuillard 10. La surface supérieure 63 du support 6 est éloignée de sa surface inférieure 61, sur laquelle se trouve la partie 51 du capteur 5 de température.

Le capteur 5 de température, lorsqu'il est formé par un thermocouple, peut être en forme de U. Lorsque le capteur 5 de température est formé par un thermocouple, le capteur 5 de température comporte un premier tronçon inférieur 510 s'étendant suivant la direction axiale X ou ayant une composante suivant la direction axiale X, le tronçon inférieur 510 formant la partie 51 d'application contre l'objet OBJ. Ce tronçon inférieur 510 du thermocouple est raccordé à un tronçon transversal 52 s'étendant le long et à distance d'une surface transversale 64 du support 6 pour être raccordé à un tronçon supérieur 53 situé à distance de la surface inférieure 61 et traversant un évidement 66 du support 6, s'étendant de la surface transversale 64 à une autre surface transversale 65 du support 6 pour ressortir de cette surface 65. Le tronçon 52 s'étend par exemple suivant la direction Z, s'éloignant de l'objet OBJ. Les surfaces transversales 64 et 65 sont éloignées l'une de l'autre et raccordées à leur extrémité supérieure à la surface supérieure 63 et à leur extrémité inférieure à la surface inférieure 61, le support 6 pouvant être parallélépipédique.

Le tronçon supérieur 53 est raccordé à un tronçon extérieur 54, qui sort de la surface transversale 65, qui s'étend sous le feuillard 10 et qui dépasse de celui-ci pour être accessible de l'extérieur et pouvoir être raccordé à une unité extérieure d'acquisition et de traitement des mesures effectuées par le capteur 5 (par exemple le conditionneur COND et/ou autre).

Le ou les ressorts 71 permettent d'exercer une pression destinée à plaquer la partie inférieure 510 du thermocouple sur l'objet OBJ de façon à garantir une mise en contact satisfaisante. La surface inférieure 61 peut comporter une rainure garantissant le positionnement du tronçon inférieur 510 du thermocouple et évitant la formation de lames d'air.

Suivant un mode de réalisation, le dispositif 8 de soulèvement du support 6 comporte un organe 83 de maintien du support 6 dans la première position haute. L'organe 83 de maintien est fixé d'une manière amovible à la platine supérieure 81. Lorsque l'organe 83 de maintien est ôté de la platine 81, le dispositif 7 de contrainte fait passer le support 6 et donc le capteur 5 de la première position haute à la deuxième position basse.

Suivant un mode de réalisation, les organes 83 de maintien, associés respectivement aux supports individuels 6 pour les différents capteurs 5 de température, sont solidaires entre eux. Dans le mode de réalisation représenté aux figures, l'organe 83 de maintien est formé par un fil 830, par exemple métallique, qui passe dans un guide 84 fixé à la platine 81 pour maintenir le support 6 dans la première position haute. Le fil 830 comporte une ou deux sections 831 situées à l'extérieur de la platine 81 pour permettre d'ôter du guide 84 le fil 830, afin d'abaisser le capteur 5 de la première position à la deuxième position. Ainsi, la section 831 est située à l'extérieur du feuillard 10 et est accessible de l'extérieur pour servir de section préhension afin de tirer sur le fil 830 pour l'ôter. Le fil 830 permet donc de faire passer l'ensemble des capteurs 5 de température de la première position haute à la deuxième position basse par une seule action de retrait de ce fil 830.

Suivant un mode de réalisation, le guide 84 est à une ou plusieurs poulies 841, 842 et 843. Le guide 84 comporte par exemple au moins deux poulies 841, 842, 843 qui sont montées rotatives par rapport à la platine 83 et entre lesquelles est guidé le fil 830. Il est par exemple prévu au moins une première poulie supérieure 841 et/ou 842 et au moins une deuxième poulie inférieure 843, le fil 830 étant guidé entre la première poulie 841 et/ou 842 d'une part et la deuxième poulie 843 d'autre part. La poulie 841 est montée rotative autour d'un axe 8410 de rotation s'étendant par exemple suivant la direction axiale X et fixé à la platine 81, par exemple directement sur, sous ou dans celle-ci. La poulie 842 est montée rotative autour d'un axe 8420 de rotation s'étendant par exemple suivant la direction axiale X et fixé à la platine 81, par exemple directement sur, sous ou dans celle-ci. La poulie 841 est à distance de la poulie 842 suivant la direction tangentielle Y. La platine 81 peut comporter une ouverture 810 permettant le passage de la poulie 841 et/ou 842. La deuxième poulie 843 est montée rotative autour d'un deuxième axe 8430 de rotation situé à distance de la surface inférieure 811 de la platine 81. La deuxième poulie 8430 se trouve par exemple entre la platine 81 et le support 6, le deuxième axe 8430 de rotation étant fixé à un bras 812 fixé en-dessous de la surface 811 de la platine. L'axe 8430 s'étend par exemple suivant la direction axiale X et se trouve entre les axes 8410 et 8420 suivant la direction tangentielle Y.

L'invention permet d'éviter de mettre en contact le capteur 5 de température contre l'objet OBJ lors de la mise en place de la ceinture 1 autour de ce dernier, par le fait que lors de cette mise en place le support 6 du capteur 5 est maintenu dans la deuxième position haute. On évite ainsi d'endommager le capteur 5 de température par frottement contre la surface de l'objet OBJ. Lorsque la ceinture a été mise en place et immobilisée par son dispositif 20 de serrage autour de l'objet OBJ, on retire l'organe 83 de maintien, ce qui fait passer le support 6 de la deuxième position haute à la première position basse. Le capteur 5 de température est ainsi appuyé contre l'objet OBJ, sans risque de mouvement latéral du capteur de température par rapport à l'objet, grâce au guidage du support 6 selon la direction 62.

Le feuillard 10 est par exemple métallique et peut être une tôle d'acier inoxydable. La longueur du feuillard 10 peut être découpée pour être adaptée à la circonférence de l'objet OBJ ou de la conduite OBJ. Le feuillard 10 est configuré pour supporter les variations de température (et donc les contraintes mécaniques) propres par exemple d'une tuyauterie haute pression OBJ (par exemple le circuit primaire d'un réacteur à eau pressurisée). Le feuillard 10 comporte des trous destinés à la fixation des patins 31, 32 contre sa surface inférieure 101. Les patins thermo-isolants 31, 32 sont fixés sous le feuillard 10 et assurent le positionnement de la ceinture 1 sur l'objet OBJ et l'isolation thermique par rapport à l'objet OBJ. Le dispositif 20 de serrage est fixé sur la surface extérieure 102 du feuillard 10.

Suivant un mode de réalisation, le dispositif 20 de serrage comporte un ensemble mécanique 203 de fixation élastique entre au moins deux pièces mécaniques 201 et 202 fixées respectivement à deux parties d'extrémité 103 et104 du feuillard 10. Notamment, le dispositif 20 de serrage peut être du type à accrochage entre les deux pièces 201 et 202.

L'ensemble mécanique 203 est par exemple de type sauterelle pouvant comporter un ou plusieurs ressorts 2030, ainsi que cela est décrit ci-dessous. L'élasticité de l'ensemble mécanique 203 de fixation assure le positionnement de la ceinture 1 sur l'objet OBJ ou la conduite OBJ sur toute la plage dimensionnelle définie par les normes régissant la fourniture de tuyauterie industrielle et autre élément de chaudronnerie. La ceinture 1 est ainsi fixée élastiquement sur l'objet OBJ. Le dispositif 20 de serrage assure un maintien élastique sur l'objet OBJ afin de résister aux dilatations différentielles et aux vibrations.

Suivant un mode de réalisation, l'ensemble mécanique 203 du dispositif 20 de serrage comporte par exemple un levier 204 articulé par un premier axe 205 d'articulation à une pièce 207 de biellette, elle-même articulée par un deuxième axe d'articulation 206 à la première pièce 201. L'axe 205 d'articulation est monté sur une chape 208 montée coulissante sur le levier 204. Le ressort 2030 de compression est prévu entre une butée 209 fixée au levier 204 et la chape 208. La butée 209 peut être formée par un ou plusieurs écrous vissés sur un filetage du levier 204. Le levier 204 est par exemple en forme d'étrier et comporte deux branches 2041 et 2042 parallèles, reliées entre elles par une troisième branche 2043 d'accrochage située à l'extrémité des branches 2041, 2042 éloignée de leur extrémité à proximité de laquelle se trouvent les butées 209. La deuxième pièce 202 comporte par exemple un deuxième organe 2020 d'accrochage destiné à coopérer avec le premier organe 2043 d'accrochage dans une position de serrage du feuillard 10 autour de l'objet OBJ dans la direction tangentielle Y. La pièce 202 d'accrochage comporte par exemple deux crochets 2021 et 2022 distants l'un de l'autre suivant la direction axiale X contre lesquels est coincée la pièce 2043 en s'étendant entre ces crochets 2021 et 2022 dans la position de serrage de la ceinture 1. La partie de la branche 2043 d'accrochage située entre les crochets 2021 et 2022 sert de poignée de préhension du levier 204. Pour desserrer le levier 204, l'utilisateur tire sur la pièce 2043 dans la direction Y dans le sens de rapprochement de la butée 209 par rapport à la chape 208, ce qui comprime le ressort 2030, jusqu'à faire passer la pièce 2043 d'accrochage derrière la pièce 202 d'accrochage. Puis l'utilisateur soulève le levier 204 pour le faire pivoter autour de son axe 205 pour ouvrir l'ensemble mécanique 203 dans une position de desserrage de la ceinture 1.

La ceinture de mesure de température suivant l'invention permet la mise en oeuvre simultanée d'une grande quantité de points de mesures en quelques minutes tout en garantissant leur positionnement géométrique. Fabriqué par exemple pour un diamètre de tuyauterie, elle est positionnable sur toute l'étendue de la norme régissant les tolérances dimensionnelles. Le positionnement des capteurs 5 mais aussi de la sortie 54 des câbles des capteurs 5 de température lors de la fabrication permet, en application de la procédure de mise en oeuvre, de se garantir contre toute erreur de positionnement et toute ambiguïté de repérage. Les recommandations qui y sont faites concernant le colisage permettent de limiter les risques de contamination surfacique et radiologique ou chimique.

La ceinture étant légère et fixée de manière élastique sur l'objet 1, et chaque capteur 5 disposant d'un système 6 de mise en pression individuel couplé à un isolant thermique 31, 32, la ceinture 1 garantit un bon contact entre le capteur 5 et l'objet OBJ et cela indépendamment des variations de température (entraînant une dilatation et donc des sollicitations mécaniques), des vibrations ou du couple de serrage sur l'objet OBJ. La ceinture 1 présente une innocuité à l'égard de l'objet OBJ et de l'installation dans laquelle cet objet OBJ se trouve.

La dépose-repose de la ceinture 1 lors des arrêts de maintenance des installations, par exemple à l'occasion d'opérations de radiographie dans le cas de conduite de fluide de REP, est rapide et le reconditionnement du dispositif 8 de soulèvement et du dispositif 7 de contrainte pour la mise en contact des supports 6 des capteurs 5 est aisé et rapide.

Le capteur 5 de température, mis en contact individuellement et isolé thermiquement par les supports 6 individuels, dispose d'un temps de réponse optimal et d'une très bonne précision de mesure sans effet de mode commun.

Suivant un mode de réalisation, la ceinture 1 peut être recouverte par un matelas 300 calorifuge. Le matelas 300 calorifuge comporte une découpe intérieure 301 correspondant au profil de la ceinture 1 (par exemple dans des applications nucléaires). Le matelas 300 est par exemple en un matériau solide ou gardant sa forme autour de la ceinture 1 et autour de l'objet OBJ. Par exemple, le matelas 300 est formé de deux demi-cylindres 302 qui sont disposés de part et d'autre de la ceinture 1 installée sur l'objet OBJ pour les entourer autour de la direction axiale X.

La ceinture 1 de mesure étant de faible épaisseur et disposant d'un isolant thermique 31, 32 au contact de l'objet OBJ peut être utilisée sans accroissement du volume extérieur du matelas calorifuge 300.

Le dispositif de serrage offre l'avantage d'être adaptable à une large plage de diamètres d'objets et de longueurs de ceintures et à tout type d'objets cylindriques : tuyauteries, pressuriseurs, générateurs de vapeur, réacteurs, échangeurs, conduites d'eau.

La ceinture de mesure suivant l'invention offre l'avantage de pouvoir installer un nombre important de capteurs de température d'une manière très rapide autour d'un objet OBJ, ce qui est particulièrement intéressant dans le cas où cet objet OBJ est situé dans un environnement contraignant, tel que, par exemple, dans l'enceinte d'un réacteur nucléaire soumis à des radiations ionisantes, pour lequel les opérateurs doivent intervenir sur une durée la plus courte possible pour être soumis le moins possible à ces radiations. L'invention permet ainsi d'installer avec une grande fiabilité un grand nombre de capteurs de température dans ces environnements contraignants.

L'invention permet de mettre en contact le ou les capteur(s) de température directement avec l'objet OBJ, ce qui permet d'optimiser la précision de la mesure de température et de diminuer les temps de réponse de celle-ci.

## Revendications

1. Ceinture de mesure de température d'un objet, la ceinture comportant :
- au moins un capteur (5) de température,
- un feuillard (10) ayant une circonférence destinée à entourer l'objet,
- un dispositif (20) de serrage du feuillard (10) autour de l'objet,
**caractérisée en ce que** le capteur (5) de température est monté sur un support (6) individuel thermo-isolant, déplaçable suivant une direction (62) de guidage vers l'objet (OBJ) entre et par rapport à au moins deux patins (31, 32) thermo-isolants d'appui contre l'objet d'une première position haute, dans laquelle le capteur (5) est à une distance non nulle de l'objet le long de la direction (62) de guidage lorsque la ceinture est fixée autour de l'objet, à une deuxième position basse, dans laquelle lorsque la ceinture est fixée autour de l'objet le capteur (5) est appliqué contre l'objet, les patins (31, 32) étant fixés au feuillard (10).

2. Ceinture suivant la revendication précédente comprenant comme capteur (5) de température une pluralité de capteurs (5) de température répartis le long de la circonférence du feuillard (10), la pluralité de capteurs (5) de température étant associée à une pluralité de supports individuels (6) thermo-isolants de ces capteurs (5) de température, les supports (6) étant guidés chacun suivant une direction (62) de guidage vers l'objet entre des patins (31, 32) thermo-isolants fixés au feuillard (10).

3. Ceinture suivant l'une quelconque des revendications précédentes, dans laquelle pour un objet ayant une surface extérieure courbe et convexe, devant être entourée par la circonférence du feuillard, la direction (62) de guidage est radiale.

4. Ceinture suivant l'une quelconque des revendications précédentes, dans laquelle le support (6) est contraint à se déplacer le long de la direction (62) de guidage vers l'objet par un dispositif (7) de contrainte monté entre le support (6) et le feuillard (10).

5. Ceinture suivant l'une quelconque des revendications précédentes, dans laquelle le capteur (5) de température comporte une partie (51) d'application contre l'objet, disposée sur une surface intérieure (61) du support (6), destinée à être tournée vers l'objet.

6. Ceinture suivant l'une quelconque des revendications précédentes, les patins (6) sont fixés à une surface intérieure (101) du feuillard (10).

7. Ceinture suivant l'une quelconque des revendications précédentes comportant un dispositif (8) de soulèvement du support (6) apte à occuper la première position haute et apte à passer à la deuxième position basse, le support (6) étant contraint à se déplacer le long de la direction (62) de guidage vers l'objet de la première position à la deuxième position par un dispositif (7) de contrainte monté entre le support (6) et le feuillard (10), le dispositif (8) de soulèvement étant actionnable de l'extérieur pour faire passer le capteur (5) de la première position à la deuxième position.

8. Ceinture suivant la revendication 7, dans laquelle le dispositif (8) de soulèvement du support (6) comporte une platine supérieure (81), fixée sur le support (6) par au moins une tige (82) traversant le feuillard (10), la platine (81) étant à l'extérieur du feuillard (10).

9. Ceinture suivant la revendication 8, dans laquelle le dispositif (8) de soulèvement du support (6) comporte un organe (83) de maintien pour maintenir le support (6) dans la première position haute, fixé d'une manière amovible à la platine supérieure (81) pour permettre, lorsque l'organe (83) de maintien est ôté de la platine (81), de faire passer le capteur (5) de la première position haute à la deuxième position basse.

10. Ceinture suivant les revendications 2 et 9 prises ensemble, dans laquelle les organes (83) de maintien, associés respectivement aux supports individuels (6), sont solidaires entre eux.

11. Ceinture suivant la revendication 9 ou 10, dans laquelle l'organe (83) de maintien comprend un fil (830), qui passe dans un guide (84) fixé à la platine (81) pour maintenir le support (6) dans la première position haute et qui comporte au moins une section (831) de préhension située à l'extérieur de la platine (81) pour permettre d'ôter du guide (84) le fil (830) pour faire passer le capteur (5) de la première position haute à la deuxième position basse.

12. Ceinture suivant la revendication 11, dans laquelle le guide (84) comporte au moins deux poulies (841, 842, 843), qui sont montées rotatives par rapport à la platine (83) et entre lesquelles est guidé le fil (830).

13. Ceinture suivant la revendication 4 ou l'une quelconque des revendications 7 à 12, dans laquelle le dispositif (7) de contrainte comporte au moins un ressort (71) monté entre le support (6) et le feuillard (10) pour contraindre le support (6) à se déplacer le long de la direction (62) de guidage vers l'objet.

14. Ceinture suivant l'une quelconque des revendications précédentes, dans laquelle le capteur (5) de température comporte un thermocouple (510).

## Patentansprüche

1. Gurt zur Messung der Temperatur eines Objekts, wobei der Gurt Folgendes umfasst:
- mindestens einen Temperatursensor (5),
- ein Band (10), das einen Umfang aufweist, der dazu bestimmt ist, das Objekt zu umgeben,
- eine Vorrichtung (20) zum Spannen des Bandes (10) um das Objekt,
**dadurch gekennzeichnet, dass** der Temperatursensor (5) an einer einzelnen wärmeisolierenden Stütze (6) montiert ist, die entlang einer Führungsrichtung (62) hin zu dem Objekt (OBJ) zwischen und in Bezug zu mindestens zwei wärmeisolierenden Schuhen (31, 32) zur Auflage gegen das Objekt von einer ersten, hohen Position, in der der Sensor (5) sich in einem Abstand von nicht Null von dem Objekt entlang der Führungsrichtung (62) befindet, wenn der Gurt um das Objekt herum fixiert ist, in eine zweite, niedrige Position verlagerbar ist, in der, wenn der Gurt um das Objekt herum fixiert ist, der Sensor (5) gegen das Objekt angelegt ist, wobei die Schuhe (31, 32) an dem Band (10) fixiert sind.

2. Gurt nach dem vorhergehenden Anspruch, der als Temperatursensor (5) mehrere Temperatursensoren (5) umfasst, die entlang des Umfangs des Bandes (10) verteilt sind, wobei die mehreren Temperatursensoren (5) mehreren einzelnen wärmeisolierenden Stützen (6) dieser Temperatursensoren (5) zugehörig sind, wobei die Stützen (6) jeweils entlang einer Führungsrichtung (62) zwischen an dem Band (10) fixierten wärmeisolierenden Schuhen (31, 32) hin zu dem Objekt geführt werden.

3. Gurt nach einem der vorhergehenden Ansprüche, wobei für ein Objekt, das eine gekrümmte und konvexe Außenfläche aufweist, die durch den Umfang des Bandes zu umgeben ist, die Führungsrichtung (62) radial ist.

4. Gurt nach einem der vorhergehenden Ansprüche, wobei die Stütze (6) durch eine Zwingvorrichtung (7), die zwischen der Stütze (6) und dem Band (10) montiert ist, gezwungen wird, sich entlang der Führungsrichtung (62) hin zu dem Objekt zu verlagern.

5. Gurt nach einem der vorhergehenden Ansprüche, wobei der Temperatursensor (5) einen Teil (51) zum Anlegen gegen das Objekt umfasst, der auf einer Innenfläche (61) der Stütze (6) angeordnet ist, die dazu bestimmt ist, dem Objekt zugewandt zu sein.

6. Gurt nach einem der vorhergehenden Ansprüche, wobei die Schuhe (6) an einer Innenfläche (101) des Bandes (10) fixiert sind.

7. Gurt nach einem der vorhergehenden Ansprüche, der eine Vorrichtung (8) zum Anheben der Stütze (6) umfasst, die geeignet ist, die erste, hohe Position einzunehmen, und geeignet ist, in die zweite, niedrige Position überzugehen, wobei die Stütze (6) durch eine Zwingvorrichtung (7), die zwischen der Stütze (6) und dem Band (10) montiert ist, gezwungen wird, sich entlang der Führungsrichtung (62) hin zu dem Objekt von der ersten Position zur zweiten Position zu verlagern, wobei die Vorrichtung (8) zum Anheben von außen betätigbar ist, um den Sensor (5) von der ersten Position in die zweite Position übergehen zu lassen.

8. Gurt nach Anspruch 7, wobei die Vorrichtung (8) zum Anheben der Stütze (6) eine obere Platte (81) umfasst, die über mindestens einen Stab (82), der das Band (10) durchquert, an der Stütze (6) fixiert ist, wobei die Platte (81) sich außerhalb des Bandes (10) befindet.

9. Gurt nach Anspruch 8, wobei die Vorrichtung (8) zum Anheben der Stütze (6) ein Halteorgan (83) zum Halten der Stütze (6) in der ersten, hohen Position umfasst, die auf abnehmbare Art an der oberen Platte (81) befestigt ist, um, wenn das Halteorgan (83) von der Platte (81) abgenommen wird, den Sensor (5) von der ersten, hohen Position in die zweite, niedrige Position übergehen zu lassen.

10. Gurt nach Anspruch 2 und 9 zusammen genommen, wobei die Halteorgane (83), die jeweils den einzelnen Stützen (6) zugehörig sind, untereinander fest verbunden sind.

11. Gurt nach Anspruch 9 oder 10, wobei das Halteorgan (83) einen Draht (830) umfasst, der in einer Führung (84) verläuft, die an der Platte (81) fixiert ist, um die Stütze (6) in der ersten, hohen Position zu halten, und der mindestens einen Greifabschnitt (831) umfasst, der sich außerhalb der Platte (81) befindet, um das Abnehmen des Drahtes (830) von der Führung (84) zu ermöglichen, um den Sensor (5) von der ersten, hohen Position in die zweite, niedrige Position übergehen zu lassen.

12. Gurt nach Anspruch 11, wobei die Führung (84) mindestens zwei Rollen (841, 842, 843) umfasst, die drehbar zur Platte (83) gelagert sind und zwischen denen der Draht (830) geführt wird.

13. Gurt nach Anspruch 4 oder einem der Ansprüche 7 bis 12, wobei die Zwingvorrichtung (7) mindestens eine Feder (71) umfasst, die zwischen der Stütze (6) und dem Band (10) montiert ist, um die Stütze (6) zu zwingen, sich entlang der Führungsrichtung (62) hin zu dem Objekt zu verlagern.

14. Gurt nach einem der vorhergehenden Ansprüche, wobei der Temperatursensor (5) ein Thermoelement (510) umfasst.

## Claims

1. A belt for measuring temperature of an object, the belt comprising:
- at least one measurement sensor (5),
- a strip (10) having a circumference intended to surround the object,
- a device (20) for clamping the strip (10) around the object,
**characterized in that** the temperature sensor (5) is mounted on an individual heat-insulating support (6), displaceable in a guiding direction (62) toward the object (OBJ) between and relatively to at least two heat-insulating pads (31, 32) which are intended to abut against the object from a first high position, in which the sensor (5) is at a non-zero distance from the object along the guiding direction (62) when the belt is attached around the object, to a second low position, in which when the belt is attached around the object the sensor (5) is applied against the object, the pads (31, 32) being attached to the strip (10).

2. The belt according to the preceding claim, comprising a plurality of temperature sensors (5) distributed along the circumference of the strip (10) as a temperature sensor (5), the plurality of temperature sensors (5) being associated with a plurality of individual heat-insulating supports (6) of these temperature sensors (5), the supports (6) each being guided in a guiding direction (62) toward the object between heat-insulating pads (31, 32) attached to the strip (10).

3. The belt according to any one of the preceding claims, in which for an object with a curved and convex outer surface, which has to be surrounded by the circumference of the strip, the guiding direction (62) is radial.

4. The belt according to any one of the preceding claims, in which the support (6) is constrained to move along the guiding direction (62) toward the object by a constraining device (7) mounted between the support (6) and the strip (10).

5. The belt according to any one of the preceding claims, in which the temperature sensor (5) comprises a portion (51) for application against the object, disposed on an inner surface (61) of the support (6), intended to be turned toward the object.

6. The belt according to any one of the preceding claims, in which the pads (6) are attached to an inner surface (101) of the strip (10).

7. The belt according to any one of the preceding claims, comprising a device (8) for lifting the support (6), wherein the device (8) for lifting the support (6) is capable of occupying the first high position and is capable of passing to the second low position, the support (6) being constrained to move along the guiding direction (62) toward the object from the first position to the second position by a constraining device (7) mounted between the support (6) and the strip (10), the lifting device (8) being actuable from the outside to cause the sensor (5) to pass from the first position to the second position.

8. The belt according to claim 7, in which the lifting device (8) of the support (6) comprises an upper plate (81), attached to the support (6) by at least one rod (82) passing through the strip (10), the plate (81) being outside the strip (10).

9. The belt according to claim 8, in which the lifting device (8) of the support (6) comprises a holding member (83) to hold the support (6) in the first high position, wherein the holding member (83) is removably attached to the upper plate (81) to allow, when the holding member (83) is removed from the plate (81), to cause the sensor (5) to pass from the first high position to the second low position.

10. The belt according to claims 2 and 9 taken together, in which the holding members (83), associated respectively with the individual supports (6), are mutually integral.

11. The belt according to claim 9 or 10, in which the holding member (83) comprises a wire (830), which passes in a guide (84) attached to the plate (81) to hold the support (6) in the first high position and which comprises at least one gripping section (831) situated outside the plate (81) to allow the wire (830) to be removed from the guide (84) to cause the sensor (5) to pass from the first high position to the second low position.

12. The belt according to claim 11, in which the guide (84) comprises at least two pulleys (841, 842, 843), which are rotatably mounted with respect to the plate (83) and between which the wire (830) is guided.

13. The belt according to claim 4 or any one of claims 7 to 12, in which the constraining device (7) comprises at least one spring (71) mounted between the support (6) and the strip (10) to constrain the support (6) to move in the guiding direction (62) toward the object.

14. The belt according to any one of the preceding claims, in which the temperature sensor (5) comprises a thermocouple (510).
